**Europäisches Patentamt**

**European Patent Office**

**Office européen des brevets**

(19)

(11) **EP 1 124 201 A1**

(12) ## EUROPEAN PATENT APPLICATION

(43) Date of publication:
**16.08.2001 Bulletin 2001/33**

(51) Int Cl.⁷: $G06T\ 7/00$

(21) Application number: **00301084.0**

(22) Date of filing: **11.02.2000**

| | |
|---|---|
| (84) Designated Contracting States:<br>**AT BE CH CY DE DK ES FI FR GB GR IE IT LI LU MC NL PT SE**<br>Designated Extension States:<br>**AL LT LV MK RO SI**<br><br>(71) Applicant: **BTG INTERNATIONAL LIMITED**<br>**(Company No. 2664412)**<br>**London EC4M 7SB (GB)** | (72) Inventor: **The designation of the inventor has not yet been filed**<br><br>(74) Representative: **Johnson, Reginald George**<br>**BTG International Limited,**<br>**Patents Division,**<br>**10 Fleet Place,**<br>**Limeburner Lane**<br>**London EC4M 7SB (GB)** |

(54) **Method for 3D/2D registration using multiple views and a surface model of an object**

(57) A method for the direct registration, of two or more 2D optical images to a 3-dimensional (3D) image or computer model without prior segmentation of images is by acquiring a plurality of optical images of the object and acquiring a three dimensional surface model made up of points on a surface of the object, choosing an initial set of parameters which define the registration between the three dimensional model coordinate system and the optical image coordinate system, measuring the quality of registration using a similarity measure and repeating until a maximum of the similarity measure is found.

Fig. 1

EP 1 124 201 A1

## EP 1 124 201 A1

**Description**

The present invention relates to a method for the registration of two or more two dimensional optical images to a three dimensional surface model. It is particularly useful in image guided surgery or computer assisted surgery. It will also find application in computer assisted manufacturing and maintenance, navigation, tracking or surveillance, or indeed in any field where a 3D model of an object of interest needs to be registered to an external view of that object.

In image guided surgery or computer assisted surgery, information from a wide variety of image sources is brought together and presented to a surgeon in an informative manner, using computers. The presentation of such images can be through computer graphics workstations, the operating microscope, auto-stereoscopic displays, or head-up displays etc. The information itself can include data from pre-operative magnetic resonance (MR), computed tomography (CT), nuclear medicine, ultrasound or X-ray images, which forms the basis of any pre-operative planning. In this application the pre-operative image data informs the surgeon as to the location and identification of physical anatomy, which may be hidden or difficult to identify, and guides the surgeon towards the target of interest. In order to do this, the computer system must be able to relate the physical space of the patient with the pre-operative data. This is the problem of registration.

When two or more images are to be brought together each image or space will have an associated coordinate system. Registration is the process by which a mapping is defined from spatial locations in one coordinate system to spatial locations in another coordinate system. It is the registration process that enables information from two images to be combined or compared, without which, each image would be treated separately.

Registration is an important part of any image guided surgery system. One type of registration problem is to register 3D images such as MR or CT images to 2-dimensional (2D) optical images. This 3D-2D registration enables graphical renderings of structures of interest, identified in pre-operative 3D medical image scans to be overlaid onto a 2D optical image of the operative scene. This provides an augmented reality where the surgeon can see, in the optical image, the features of the patient and also the renderings of the pre-operative data. The overlaying of these renderings in the optical image provides information to the surgeon as to the relative position of objects of interest such as tumours or blood vessels, which may not be visible in the physical scene or optical image, thereby providing guidance. A critical stage is to make sure the renderings are overlaid in the correct position in the optical image. The data from the 3D image must be accurately registered with the 2D optical image. An accurate registration procedure can therefore be used to guide the surgeon, to avoid damaging critical structures, to make procedures quicker and safer. Registration is more difficult when the images to be combined contain different image information such as when one image is an optical image from an optical camera, video camera, microscope, endoscope etc. which is what the real world looks like and the other image is a tomographic medical image, other remotely sensed image, computer aided design (CAD), or computer assisted manufacture (CAM) generated image or other three dimensional model of a real image i.e. it is a model of the real world. In general terms, the problem of registering two dimensional image data to a three dimensional representation of that object is encountered in many fields. It is of relevance anywhere where there is a need to map the external view of an object to data representing the object in the three dimensions.

Typical computer vision approaches rely on extracting known landmark features (fiducials) that are easily visible in both the 2D or 3D image. Point correspondence is then determined, and the registration determined using direct methods, iterative methods or by calculating a transformation matrix and then recovering the necessary parameters. However, in medical images a trained radiologist is required to accurately locate landmark points. Alternatively artificial landmarks can be fixed to the patient. Unfortunately, patient friendly landmarks such as skin mounted markers provide inaccurate registration and rigidly attached markers such as bone screws are invasive and not suitable for many of the proposed radiotherapy, interventional or surgical applications.

Known existing, developed medical solutions are based on the registration of surfaces. These methods take optical images of the patient and using additional hardware, such as a laser beam or a patterned light projector, reconstruct a 3D model of the patient's surface. This surface is matched to a surface extracted from the 3D MR/CT image. In either of these methods, the surface must be reconstructed before it is matched, and any errors in surface reconstruction will propagate through the system to produce inaccurate registration. Furthermore the laser beam method requires that the laser is calibrated with respect to the optical cameras, and some manual interaction can be required to achieve a sufficiently accurate surface registration.

The present invention is based on obtaining an improved registration by taking an estimate (the best estimate) of the registration of the three dimensional image e.g. obtained from an MR/CT scan, and the optical image and measuring the quality of the registration and repeating until the best registration is found.

According to one aspect of the invention there is provided a method for registration of a set of two dimensional image data to a set of three dimensional data which method comprises the steps of :-

(i) acquiring a plurality of optical images of an object
(ii) acquiring a three dimensional surface representation of the object,

(iii) choosing an initial set of registration parameters which define an estimate of the registration between the three dimensional coordinate system and the optical image coordinate system

(iv) determining the quality of registration using a similarity measure and

(v) repeating steps (iii) and (iv) according to an iterative search strategy until an optimum similarity measure is found.

Further advantageous aspects of the invention are defined in the dependent claims.

The estimate chosen in step (iii) is normally the current best estimate. The 3D surface representation can be made up of points in the surface or any parameterisation of the surface from which points can be generated. It may be derived from a tomographic imaging system, or may be computer generated.

The plurality of optical images can be acquired from a plurality of cameras which are rigidly fixed to each other, or by one camera which takes two or more images, in either case the transformation between each camera coordinate system must be known. When one camera is used, the transformation between the different camera images is obtained by tracking the camera as it moves.

The simplest arrangement is to take two or more optical cameras, where the transformation between each camera coordinate system is known. Furthermore, the cameras should be calibrated or matched so that each camera has a known or the same signal response to light. The scene should be illuminated using one or more light sources whose position relative to the cameras need not be known.

Two or more optical or video images of the object are acquired for a given pose and the similarity measure computes a measure of how consistent the intensity information in each video view is with a locally computable lighting model.

A locally computable lighting model is assumed which describes how the surface of the object should reflect light. A locally computable lighting model is one that does not include transparency, shadows and inter-reflections, for example a Lambertian lighting model. The reflectance of a Lambertian surface is proportional to the cosine of the angle between the surface normal, and the vector to the light source, and is independent of the camera position. Therefore under these conditions, a point on a surface of an object with reflectance properties that can be approximated by the Lambertian lighting model, should be imaged as equally bright intensities in all optical images that this point is visible in. The images of these points are deemed to be 'photo-consistent'.

In an alternative aspect of the invention there is provided a method of registration of a plurality of optical images to a three dimensional surface representation in which:-

(i) a three dimensional surface model of an object and two or more optical images of the same object are acquired,

(ii) a lighting model is assumed which describes how the surface of the object should reflect light,

(iii) a set of initial extrinsic parameters are chosen which define the registration between the three dimensional model coordinate system, and the coordinate systems of cameras from which the optical images are acquired,

(iv) the quality of the registration is measured quantitatively using a similarity measure, based on said lighting model,

(v) a new set of extrinsic parameters are chosen according to a search strategy, and the similarity measure evaluated,

(vi) step (v) is repeated until the similarity measure reaches a satisfactory maximum.

A further aspect of the invention provides a method for registration of a set of two dimensional image data to a set of three dimensional position data comprising:

(i) acquiring said set of two dimensional image data

(ii) acquiring said set of three dimensional position data

(iii) choosing an initial set of registration parameters which define the registration between the three dimensional coordinate system and the two dimensional coordinate system

(iv) determining the quality of registration using a similarity measure and

(v) employing an iterative search strategy to optimize said similarity measure.

The invention also provides an image registration apparatus for performing the method as herein claimed.

Figure 1 illustrates the concept of photo-consistency on which the invention is based.

Figure 2 illustrates a further aspect of the concept of photo-consistency.

Figure 3 shows graphically response functions that are used to opimise the similarity measure.

The invention will now be described in more detail with reference to the accompanying drawings.

In the method of the invention, the 3D surface model of an object can be made up of points on a surface, and two or more video images of the same object can be acquired. A lighting model can be assumed which describes how the surface of the object should reflect light. A set of initial registration parameters are chosen. These registration parameters define the transformation between the 3D model coordinate system, and the 2D camera coordinate systems. The quality of the registration is measured quantitatively using a similarity measure based on 'photo-consistency'. Repeatedly, a new set of registration parameters are chosen according to a search strategy, and the similarity measure evaluated. Depending on the exact form of the similarity measure, the similarity measure will increase (or decrease) as a better registration is found. When the maximum (or minimum) of the similarity measure is found the search is finished and the 3D model and the 2D video images are registered. This system can use any multi-dimensional search strategy, e.g. gradient ascent (W H. Press, S. A. Teukolsky, W T. Vetterling et al. Numerical Recipes in C. The Art of Scientific Computing. Cambridge University Press, Cambridge, 1992) to maximise (or minimise) the similarity measure with respect to the registration parameters.

The invention overcomes the problem of accurately aligning the coordinate systems of 2D and 3D images or models, without explicitly modelling different lighting conditions and parameters, and without being dependent on the 3D image or model type.

In a 3D surface model of an object the points in this model are specified in terms of a 3D Cartesian (*x, y, z*) coordinate system. The model can either be extracted from a 3D image, or defined using purely virtual models i.e. CAD models, or range data or any other system that can create 3D coordinates and surfaces that accurately represent a real object. In an optical image of the object each image has 2D pixel coordinates with a Cartesian (*x, y*) coordinate system. The registration problem overcome by the invention is to define a 3D to 2D mapping from 3D points to 2D pixels. This mapping can be defined using a rigid body transformation followed by a perspective projection. The rigid body transformation is specified using 6 degrees of freedom, i.e. 3 translations and 3 rotations which align the model coordinate system with the camera coordinate system. The parameters of the projection process depend on the specific camera model chosen. Typically for a pinhole camera model, 4 parameters are needed specifying the focal length, the origin of the 2D image coordinate system, and the ratio of the x and y pixel size.

The registration parameters of the projection process are called the intrinsic parameters and the parameters of the rigid body transformation are called the extrinsic parameters.

The problem in 3D-2D registration is to calculate the transformation from 3D model coordinates to 2D optical image coordinates, which is precisely, finding the extrinsic and intrinsic parameters. For a given registration task, the intrinsic parameters can optionally be fixed and hence obtained using an off-line calibration procedure. The registration task then consists of finding just the extrinsic parameters. The problem of finding just the extrinsic parameters is also known as pose estimation, determining the exterior orientation or extrinsic parameter calculation.

The system of the present invention can be used to calculate the intrinsic and extrinsic camera parameters simultaneously or to determine the extrinsic parameters only, when the intrinsic parameters are known.

The calculation of the similarity measure utilises the concept of 'photo-consistency'. The term photo-consistency is taken from the shape reconstruction literature, and is based on the following observation. Consider a point on the surface of an object, and this object has been imaged using two or more optical cameras. For each optical image, that a given surface point is visible in, the imaged intensity of that point should be consistent. The term 'photo' refers to the optical images. Thus if a point is imaged in two or more views, then the corresponding image intensities for that point can be measured for their 'photo-consistency'. The overall measure of registration is quantified by the similarity measure. The similarity measure is the sum or other combination of the measures of photo-consistency over all points in the surface. Photo consistency is described by K.N. Kutulakos and S. M. Seitz " A theory of shape by space carving" tech rep., University of Rochester Computer science Department May 1988.

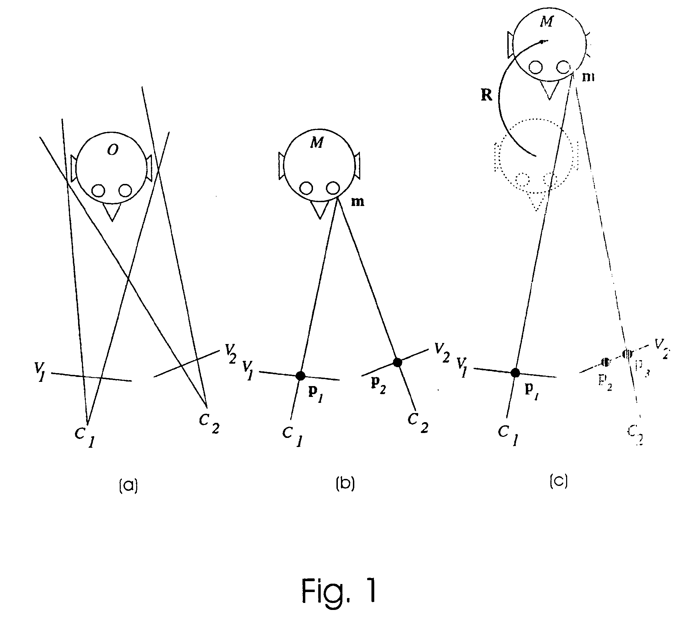

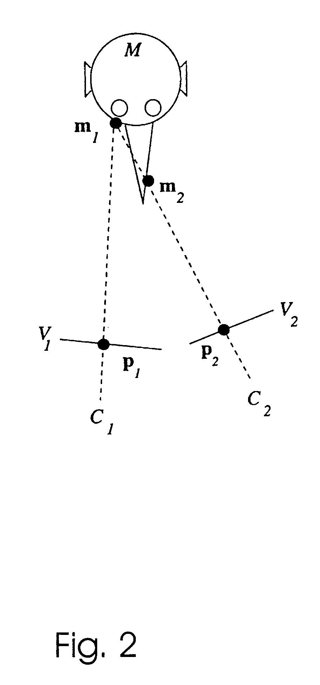

This is illustrated in figure 1 of the accompanying drawings, which illustrates how the concept of 'photo-consistency' works. Figure 1(a) shows two optical cameras $C_1$ and $C_2$ which produce optical images $V_1$ and $V_2$ of a real object $O$. Assume that the correct registration transformation is known i.e. the extrinsic and intrinsic parameters are known. This is the case for image 1(b). A model point **m** of a surface model $M$ then projects onto image point $\mathbf{p}_1$ and $\mathbf{p}_2$. As the model is registered to the optical images, then the intensity values at $\mathbf{p}_1$ and $\mathbf{p}_2$ should be photo-consistent. For example, if a model point **m** represents a point on the cheek of the model (see figures 1 and 2), then this point should not appear one intensity in image $V_1$ and a completely unrelated intensity in $V_2$. In figure 1(c), the model is misregistered. In this case, model point **m** will project onto $\mathbf{p}_1$ and $\mathbf{p}_3$, which are likely to be less photo-consistent than $\mathbf{p}_1$ and $\mathbf{p}_2$ in figure 1(b). The similarity measure is a function, which evaluates how well aligned as a whole all the points in the surface model are with respect to all the video images. Thus the photo-consistency of each model point is measured, and the similarity measure combines this information into one overall similarity measure, which quantifies the quality of the registration. In order to measure the photo-consistency, it is necessary to assume a lighting model to describe how the surface should reflect light. This lighting model can be used to take an image intensity in one view, and calculate in the ideal case, what the corresponding intensity would be in another image. As illustrated in figure 2, it is necessary to determine which points are actually visible in which views. In Figure 2, model point $m_1$ projects to pixel $p_1$ in image $V_1$, but does not project to pixel $p_2$ in image $V_2$ as the model point $m_2$ is closer to camera $C_2$ than point $m_1$. Provided the points on the object are visible in each view, the measure of photo-consistency is then a measure of how closely the image intensities for a given point actually fit the lighting model. Two such measures are described below in further detail.

When a set of initial registration parameters are chosen, the similarity measure to be used can be developed mathematically. Let the optical images be denoted by $V_n$ where n = 1 ... N is an index labelling each optical image. Let the model surface points that are visible in all optical views be denoted by $m_i$, in homogeneous coordinates, where $i$ = 1 ... $I$ is an index labelling these $I$ points. To evaluate the similarity measure each model point is projected into each optical image using

$$k_{\mathrm{P}i,n} = \mathrm{M}_n\, \mathrm{m}_i \tag{1}$$

where $\mathbf{P}_{i,n}$ is a homogeneous coordinate in optical image $n$, projected from model surface point $i$, $\mathbf{M}_n$ is the 3 x 4 perspective projection matrix, calculated from the extrinsic and intrinsic parameters of optical image $n$, which projects $m_i$ onto $\mathbf{p}_{i,n}$ and $k$ is a homogeneous scale factor. The optical image intensity at point $\mathbf{p}_{i,n}$ is given by The arithmetic mean $v_{i,n}$ of the pixel values $v_{i,n}$ associated with a given point is calculated as

$$\overline{v_{i,n}} = \frac{1}{N} \sum_{n=1}^{N} v_{i,n} \tag{2}$$

$$e_i^2 = \frac{1}{N-1} \sum_{n=1}^{N} (v_{i,n} - \overline{v_{i,n}})^2 \tag{3}$$

and the mean sum of squared differences

A similarity measure, the sum of squared differences of photo-consistency,

$$\mathrm{PCS} = \frac{1}{I} \sum_{i=1}^{I} e_i^2 \tag{4}$$

PCS can now be defined as

In other words, a point in the surface model is projected into each optical image, and the intensity read and the squared error $e_i^2$ calculated. The similarity measure is PCS which is the sum of the squared error evaluated for each model point in the surface and normalised (divided) by the number of points. With greater than two optical images, PCS would be the sum of the variance of the intensity values that a given 3D point projects to. An alternative measure would be to set a threshold $t$ on the squared error and define whether a set of pixel intensifies were consistent or not. The function $G_i$ could be defined as

$$G_i = \begin{cases} 1 & : & e_i^2 < t \\ 0 & : & e_i^2 >= t \end{cases} \tag{5}$$

and then an alternative cost function, the sum of photo-consistent points , PCG can be defined as

$$\mathrm{PCG} = \sum_{i=1}^{I} G_i \tag{6}$$

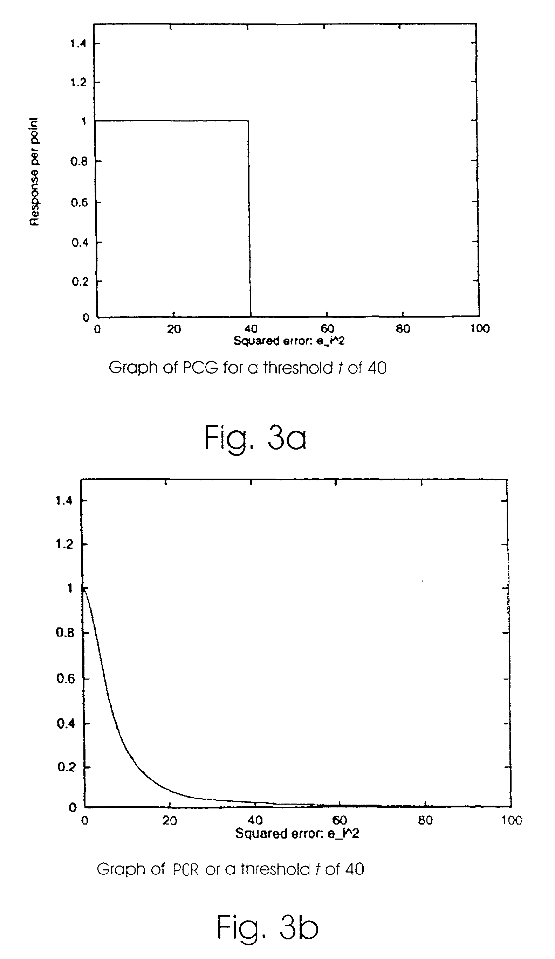

This is illustrated in figs. 3a and 3b of the accompanying drawings in which graph (a) shows the response for a single point, using $G_i$ from equation 5. When a more continuous response function for each point is preferable, to provide a smoother overall cost function, more suitable for optimisation, an alternative similarity measure PCR could be used, where

$$\text{PCR} = \sum_{i=1}^{I} \frac{t^2}{t^2 + e_i^2} \tag{7}$$

where $t$ is a threshold, and $e_i^2$ is the squared error mentioned earlier in equation (5).

The response per point for this function is shown in figure 3(b), $t$ can be calculated or set to a value representing the typical noise level for image intensity values.

It is necessary to calculate which points are visible in which views (see figure 2). This can be easily accomplished using a z-buffer technique

Other similarity measures can be defined. The common framework would be an assumed lighting model, a measure of how photo-consistent the intensifiers are for a given point projected into each view, and an overall similarity measure. The lighting model can be any locally computable lighting model i.e. no transparency, no shadows or inter-reflections. The measure of consistency will be based on the assumed lighting model, and the relative position of the lights and cameras. The overall similarity measure can be based around a sum of squared error, variance, or other robust estimator.

It is a feature of the system of the invention that it has the advantage that hardware such as a patterned light projector, or laser scanner is not needed. This will reduce cost when compared with other systems. It will also be applicable when the use of patterned or laser light is unusable or inappropriate e.g. when registering images of hot bodies.

Furthermore this system does not require surface reconstruction and lends itself to efficient, or parallel, implementation. Therefore registration is potentially fast.

This system benefits because it is intensity based in the sense that no segmentation of the optical images is necessary. The model is matched directly to the optical images. Therefore a potentially error prone part of the process is removed as segmentation of the 2D images is unnecessary.

The system of the invention, as well as being used in image guided surgery, can also be used in radiotherapy patient positioning, maxillofacial surgery planning, medical robotics and in non-medical applications such as remote sensing, robotics, computer vision, telemanipulation, computer assisted manufacturing and in any operation where it is necessary for an operator to use a generated image as a guide to carrying out an operation on a real object. This can be when the real object is inaccessible or invisible e.g. inside a hazardous area such as a nuclear plant or in space operations such as in remote docking. The system of the invention can also be used to overlay exactly an acquired image with an optical image for maintenance or forensic work, e.g. a computer generated image of what a mechanism should look like can be overlayed on an actual image of the real object and discrepancies noted and instruction for repair or maintenance transmitted. The images can be overlayed in a head mounted viewer worn by the operator.

The invention is described in the following example.

Example

Four calibrated video cameras were used to obtain images of a volunteer's face. Using an independent surface reconstruction method a surface model was generated that was intrinsically registered to the four video views, thus providing an accurate gold standard. In addition a previously acquired MR scan was used (gradient echo, 256 x 256 x 132 voxels at 1.0 x 1.0 x 1.3 mm) of the volunteer and created a surface model by segmenting the skin surface using ANALYZE (Biomedical Imaging Resource, Mayo Foundation Rochester, MN, USA.) and created a triangle mesh model using the marching cubes algorithm in VTK. From the gold standard pose, misregistrations of the reconstructed surface were created by adding an offset to each of the six parameters describing the pose of the surface model with respect to the video images. The offset was 8 mm or degrees, and 64 tests were performed, which is every possible combination of adding ±8 mm or degrees onto each of six parameters. The algorithm was then used to register the surface model to the four video images. The projection error and 3D error (as defined in Clarkson *et al* " SPIE 3661, 1999) were calculated to measure the accuracy and precision with respect to the gold standard.

Subsequently, from an initial visually acceptable registration, 64 misregistrations of the MR surface model were created by adding ±8 mm and degrees onto each of the pose parameters, and the algorithm used to register the MR surface model to the four video images. No gold standard was available, and so the results were assessed visually and the standard deviation of the pose parameters inspected.

Results: For the reconstructed surfaces, all of the 64 registrations converged towards the gold standard. The initial projection error ranged from 16.71 to 8.20 mm and the 3D error from 18.94 to 15.91 mm. After registration. the mean projection error was 1.27 ± 0.27 mm and the mean 3D error was 1.34 ± 0.24 mm. For the MR surface, all of the 64 registrations converged to a visibly good pose. The standard deviation of the pose parameters ranged from 0.18 - 0.68 mm and degrees. This indicates a precise and robust registration.

It is to be appreciated that although the example above has been described in the context of medical imaging the present invention finds application in any field where problems of image registration as herein described occur.

**Claims**

1. A method for registration of a set of two dimensional image data to a set of three dimensional data which method comprises the steps of :-

    (i) acquiring a plurality of optical images of an object
    (ii) acquiring a three dimensional surface representation of the object,
    (iii) choosing an initial set of registration parameters which define an estimate of the registration between the three dimensional coordinate system and the optical image coordinate system
    (iv) determining the quality of registration using a similarity measure and
    (v) repeating steps (iii) and (iv) according to an iterative search strategy until an optimum similarity measure is found.

2. A method according to claim 1 where the three dimensional surface representation is derived from a three dimensional tomographic image which is made up of points on the surface of the object in the tomographic image.

3. A method according to claim 1 where the three dimensional surface representation is derived from a computer model, or a parameterisation of the object surface from which points are generated.

4. A method as claimed in claim 1 in which the plurality of optical images are acquired from a plurality of cameras which are rigidly fixed to each other and in which the transformation between each camera coordinate system is known.

5. A method as claimed in claim 1 in which the plurality of optical images are acquired by one camera which takes two or more images and the transformation between the different camera images is obtained by tracking the camera as it moves.

6. A method as claimed in claim 4 in which the cameras are calibrated or matched so that each camera has the same signal response to light.

7. A method as claimed in any one of the preceding claims in which two or more optical or video images of the object are acquired for a given pose and the similarity measure computes a measure of how consistent the intensity information in each video view is with a locally computable lighting model.

8. A method as claimed in any one of the preceding claims in which the calculation of the similarity measure is carried out using photo-consistency as herein defined.

9. A method of registration of a plurality of optical images to a three dimensional surface representation in which:-

    (i) a three dimensional surface model of an object and two or more optical images of the same object are acquired,
    (ii) a lighting model is assumed which describes how the surface of the object should reflect light,
    (iii) a set of initial extrinsic parameters are chosen which define the registration between the three dimensional model coordinate system, and the coordinate systems of cameras from which the optical images are acquired,
    (iv) the quality of the registration is measured quantitatively using a similarity measure, based on said lighting model,
    (v) a new set of extrinsic parameters are chosen according to a search strategy, and the similarity measure evaluated,
    (vi) step (v) is repeated until the similarity measure reaches a satisfactory maximum.

**10.** A method as claimed in claim 1 or 9 in which the search strategy uses gradient ascent.

**11.** A method for registration of a set of two dimensional image data to a set of three dimensional position data comprising:

> (i) acquiring said set of two dimensional image data
> (ii) acquiring said set of three dimensional position data
> (iii) choosing an initial set of registration parameters which define the registration between the three dimensional coordinate system and the two dimensional coordinate system
> (iv) determining the quality of registration using a similarity measure and
> (v) employing an iterative search strategy to optimize said similarity measure.

**12.** An image registration apparatus for performing the method as defined in any of the previous claims.

Fig. 1

Fig. 2

Graph of PCG for a threshold *t* of 40

# Fig. 3a

Graph of PCR or a threshold *t* of 40

# Fig. 3b

**European Patent Office**

**EUROPEAN SEARCH REPORT**

Application Number

EP 00 30 1084

### DOCUMENTS CONSIDERED TO BE RELEVANT

| Category | Citation of document with indication, where appropriate, of relevant passages | Relevant to claim | CLASSIFICATION OF THE APPLICATION (Int.Cl.7) |
|---|---|---|---|
| D,X | CLARKSON M J ET AL: "Registration of multiple video images to pre-operative CT for image guided surgery" MEDICAL IMAGING 1999: IMAGE PROCESSING, SAN DIEGO, CA, USA, 22-25 FEB. 1999, vol. 3661, pt.1-2, pages 14-23, XP000921323 Proceedings of the SPIE - The International Society for Optical Engineering, 1999, SPIE-Int. Soc. Opt. Eng, USA ISSN: 0277-786X * abstract * * paragraphs [02.2],[02.3] * --- | 1-12 | G06T7/00 |
| A | WEESE J ET AL: "2D3D registration and motion tracking for surgical interventions" PHILIPS JOURNAL OF RESEARCH,NL,ELSEVIER, AMSTERDAM, vol. 51, no. 2, 1 January 1998 (1998-01-01), pages 299-316, XP004126965 ISSN: 0165-5817 * abstract * * page 302, line 6 - line 12 * * paragraph [0003] * --- | 1-12 | |
| A | PRATT W K: "CORRELATION TECHNIQUES OF IMAGE REGISTRATION" IEEE TRANSACTIONS ON AEROSPACE AND ELECTRONIC SYSTEMS,US,IEEE INC. NEW YORK, vol. AES-10, no. 3, May 1974 (1974-05), pages 353-358, XP000892039 ISSN: 0018-9251 --- -/-- | | TECHNICAL FIELDS SEARCHED (Int.Cl.7) G06T |

The present search report has been drawn up for all claims

| Place of search | Date of completion of the search | Examiner |
|---|---|---|
| BERLIN | 27 June 2000 | Bouchaâla, N |

CATEGORY OF CITED DOCUMENTS

X : particularly relevant if taken alone
Y : particularly relevant if combined with another document of the same category
A : technological background
O : non-written disclosure
P : intermediate document

T : theory or principle underlying the invention
E : earlier patent document, but published on, or after the filing date
D : document cited in the application
L : document cited for other reasons

& : member of the same patent family, corresponding document

EPO FORM 1503 03.82 (P04C01)

**European Patent Office**

## EUROPEAN SEARCH REPORT

Application Number

EP 00 30 1084

### DOCUMENTS CONSIDERED TO BE RELEVANT

| Category | Citation of document with indication, where appropriate, of relevant passages | Relevant to claim | CLASSIFICATION OF THE APPLICATION (Int.Cl.7) |
|---|---|---|---|
| A | BROWN L G: "A SURVEY OF IMAGE REGISTRATION TECHNIQUES" ACM COMPUTING SURVEYS,US,NEW YORK, NY, vol. 24, no. 4, 1 December 1992 (1992-12-01), pages 325-376, XP000561460 ISSN: 0010-4892 ----- | | |

TECHNICAL FIELDS SEARCHED (Int.Cl.7)

The present search report has been drawn up for all claims

| Place of search | Date of completion of the search | Examiner |
|---|---|---|
| BERLIN | 27 June 2000 | Bouchaâla, N |

CATEGORY OF CITED DOCUMENTS

X : particularly relevant if taken alone
Y : particularly relevant if combined with another document of the same category
A : technological background
O : non-written disclosure
P : intermediate document

T : theory or principle underlying the invention
E : earlier patent document, but published on, or after the filing date
D : document cited in the application
L : document cited for other reasons

& : member of the same patent family, corresponding document

EPO FORM 1503 03.82 (P04C01)